# EUROPEAN PATENT APPLICATION

(11) **EP 2 346 301 A1**
(43) Date of publication of application: **20.07.2011**
(21) Application number: 10250064.2
(22) Date of filing: 15.01.2010
(51) Int. Cl.: H04W 88/10, H04W 76/02, H04W 48/12

(54) **Network access point for accessing networks of different mobile network operators**

(71) Applicant: British Telecommunications public limited company, London, Greater London EC1A 7AJ (GB)
(72) Inventor: The designation of the inventor has not yet been filed
(74) Representative: Lidbetter, Timothy Guy Edwin

(57) **Abstract**

An access point base station (femtocell) 1 has provision for running a plurality of call sessions (280, 281.......) providing network access (23) to the core networks of a corresponding plurality of network operators. The femtocell communicates with any mobile cellular handsets over a wireless interface (22) common to all the network operators, calls being routed (27) by the femtocell to and from each handset's home network through the appropriate session (280, 281......).

The femtocell transmits beacon signals (25) for each network operator over the common wireless interface (22), and the response received from a handsets by the femtocell determines to which call session (280, 281......) it should be connected.

## Description

This invention relates to access points for telecommunications, and in particular to cellular base stations capable of wireless communication with cellular handsets within a very limited range, and connected indirectly through a packet switching network such as the "Internet" to a switching centre specially configured to co-operate with such cells. Such base stations are known as "Access Point Base Stations" or ""Femtocells", and were developed to allow cellular telephones to operate in confined spaces, to which wireless access from the fixed cellular network base stations is limited or impossible, for example in windowless rooms.

The switching centres with which the femtocell co-operates are known as "quasi mobile switching centre" (QMSC), and interact with the operator's home location, register (HLR), and with its conventional mobile switching centres serving the fixed base stations of the operator's core network, to route calls between each other or to other operators' fixed or mobile networks. The core network interacts with the QMSC as it would with any other mobile switching centre.

In normal operation a conventional handset is arranged to connect to a preferred network, usually the public cellular network which issued the subscriber identity module (SIM) in the handset and to which the user pays his subscription and call charges. This is known as its "native" or "home" network. Usually such connection is automatic, and the handset only seeks alternative networks if the home network is not available - for example when the user is travelling in foreign countries, or in locations where the home network provides no coverage. In the first instance, the handset would "roam" to a local operator's cellular network; in the latter case to a femtocell should one be available. The roaming process in both cases is similar - the visited network corresponds with the home location register (HLR) of the native network to confirm the account details of the user, and to exchange billing information and call forwarding details.

The available spectrum on which a femtocell has to operate has to fall within that on which the mobile handsets will operate, and this is usually already allocated to the mobile network operators for use by their fixed base stations. Femtocells are typically used to provide infill at locations where the fixed base stations cannot penetrate, so interference is unlikely to be a problem. However, it is necessary for them to share spectrum with one of the mobile network operators.

Although each mobile network operator is normally allocated part of the available wireless spectrum for its own use, cellular handsets are capable of operation throughout the entire range allocated to all of the networks. This allows handsets to be manufactured that can operate on any network, and also simplifies roaming, subscription portability, and other facilities. Each handset's access to an individual network is controlled by the data held in its "SIM" (subscriber identity module) which determines the network identity signals to which it will respond.

A problem arises when, as is usual, there is more than one mobile network operator active in the region where the femtocell is to be used. Any user accessing the network through a femtocell other than through the network to which the femtocell is linked will have to use "roaming" capabilities to direct calls to and from its "home" network. For the network operator this adds complexity to the provision of this service, and for the user roaming may incur additional cost, or more limited services may be available.

The present invention mitigates these problems by providing a shared access point service to be provided from a single access point apparatus. It is known for fixed base stations belonging to two or more mobile network operators to share infrastructure, for instance being mounted on the same mast, and even sharing a landline connection to a network distribution point, but in such cases each operator maintains its own wireless interface and transmits on its own spectrum. The duplication of facilities would make for an unnecessarily cumbersome device if it were to be installed in a device the size of a typical femtocell, especially given that typical femtocells are capable of supporting only a few handsets at any one time, and therefore much of that capacity would be unused.

In the present invention, an access point base station is provided having a network interface, a plurality of network access client applications each for routing calls to and from a respective mobile core network, and a wireless interface for transmission and reception of radio signals to and from mobile communications handsets, signal generation means for generating a beacon signal carrying a plurality of network identities corresponding to each of the mobile core networks for transmission over the wireless interface over a common communications channel, a call processor for receiving a handshake signal from a mobile communications terminal indicative of the network identity to which it is responding, and for establishing a communications connection between a mobile communications terminal and the mobile core network corresponding to the network identity indicated by the handshake signal. Preferably, the network identities are each transmitted in rotation, to minimise the time a handset has to wait for its respective network identity to be transmitted. However, it may be easier for a handset to lock on if two or more transmissions of the same network identity are transmitted together in each cycle. The transmission of identities may be suspended during a handshake process, in order to speed up the process and avoid spurious activity caused by the other identities.

This invention allows a single wireless interface to be used by customers of several different mobile network operators, each being provided with access to the quasi-mobile switching centre of its own home network, but using a common wireless communications channel. This reduces the complexity of the wireless interface and allows the base station to be accessed by customers of any and all mobile network operators. Each handset recognises the femtocell as a base station of its home network, and therefore does not need to attempt a "roaming" connection. The initial beacon signals transmitted by the transmitter are detectable by all handsets, regardless of the network to which they subscribe, but the programming in the SIM determines whether they respond to them. The signals could use GSM, UMTS, EUMTS or any combination. All handsets should be able to use the same set of spectrum.

Cellular handsets periodically scan the spectrum for signals from base stations carrying the network identity specific to the coding in their respective SIM_{S}. Any handset in range of the femtocell would therefore detect the beacon signal and would also detect that the beacon is carrying the network identity that it is set to recognise. It will therefore respond conventionally, by registering to the code information transmitted for the relevant mobile network, and switch to one of the communications channels allocated to the femtocell, according to instructions from the femtocell transmitted during the handshake process. The femtocell routes the mobile registration, authorisation and eventually voice transmission through the client server appropriate to the network corresponding to the network identity to which the handset responded.

The network connectivity could be either via virtual private network (vpn) or by discrete private circuits to each network operator's mobile core network. Separate internet connections (sessions), are run to each core network to which a handset is currently connected through the femtocell. The femtocell identifies which BTS/BSS identification is to be used either through translation of the IMSI of the handset, which should point to an MNO owner, or from the handset's response to the initial paging signal.

An embodiment of the invention will be described by way of example, with reference to the Figures, in which:
Figure 1 is a schematic illustration of the various elements that co-operate in the performance of the invention;
Figure 2 is a schematic illustration of an access point base station ("femtocell") according to the invention
Figure 3 is a sequence diagram illustrating the data exchanges taking place during an initial beacon acquisition process.
Figure 4 is a flow diagram illustrating the procedures performed by the access point base station during the handover process.

It should be noted that the handsets and the core network systems, including the quasi-mobile switching centres, may all be of conventional type.

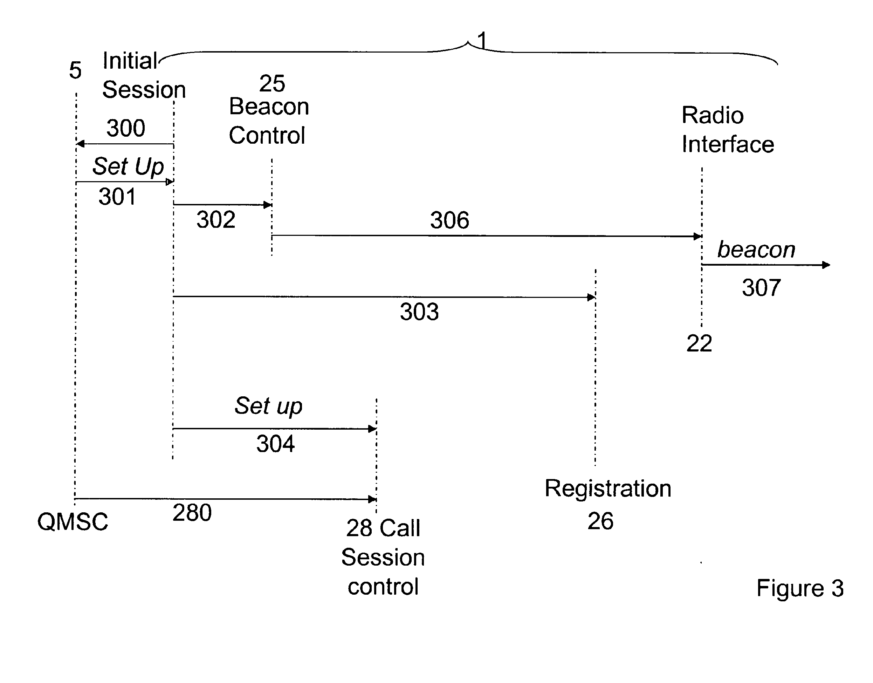

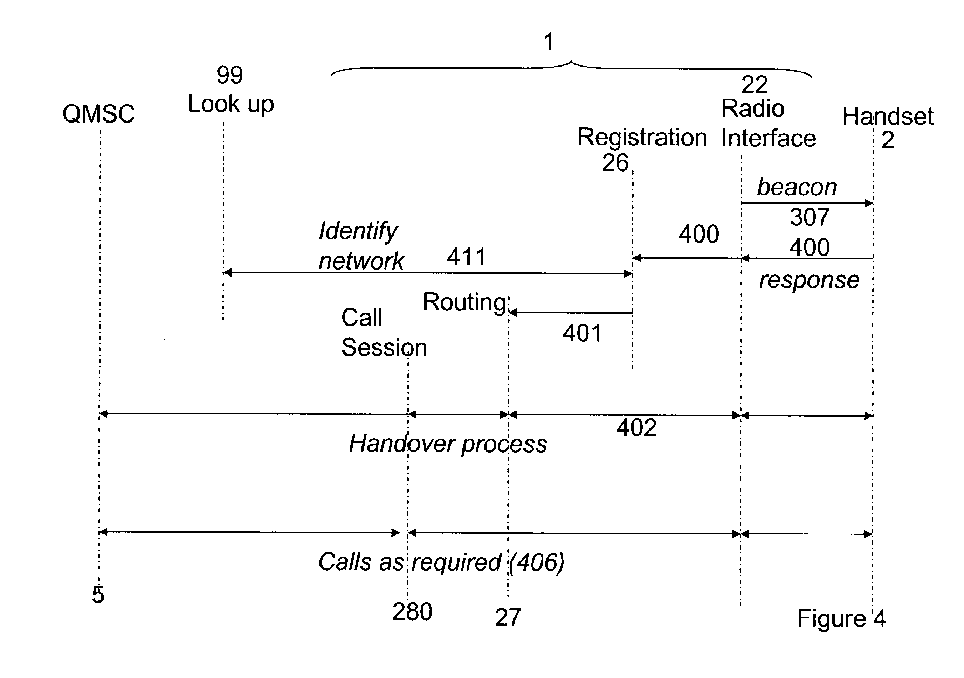

It should also be noted that the process illustrated in Figure 3 is repeated for each network (QMSC) with which the access point establishes a connection. Similarly, the process illustrated in Figure 4 is repeated for each mobile handset which establishes communication with the access point.

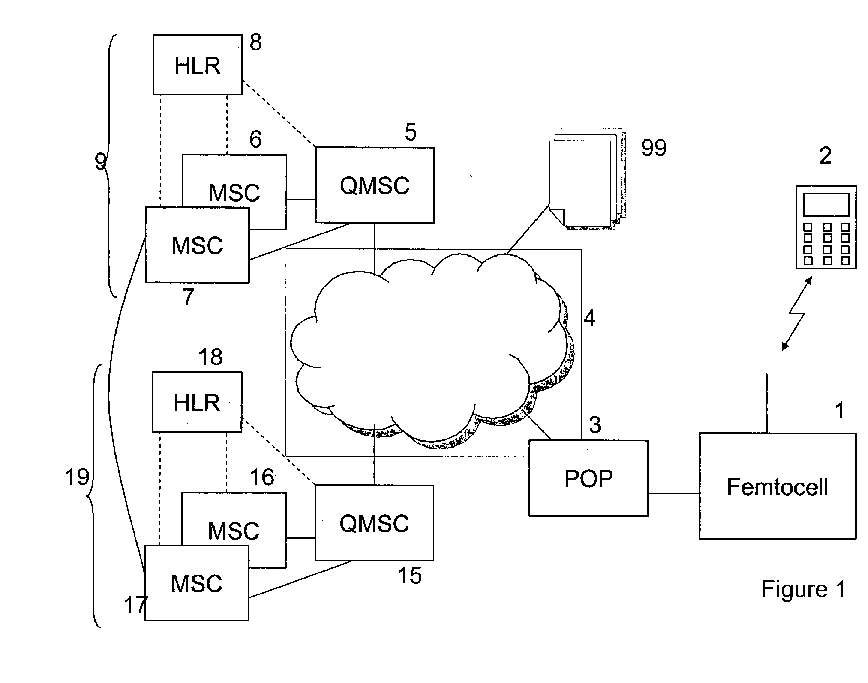

Figure 1 depicts an access point base station (femtocell) 1 according to the invention, which is capable of communication over a wireless connection with a mobile handset 2. In practice it may be capable of communication with several such handsets simultaneously. The wireless connection may use any standard protocol, such as the GSM, UMTS, or EUMTS standard, or some combination of these.

The access point base station 1 is also connected through a point of presence (POP) 3 to a digital packet switched communications network 4 such as the "Internet". The connection to the point of presence 3 may be by any conventional means, such as wireless (wifi), copper or fibre optic, but because of the likely uses to which such access point base stations are put, fixed connections are usually preferred.

A cellular telephone network 9 is depicted in Figure 1. The network has a home location register (HLR) 8 and a number of mobile switching centres (MSC) 6, 7, for routing calls to and from associated cellular base stations (not shown). Calls can be routed between base stations (and thus between mobile handsets) associated with different mobile switching stations using interconnects between them. One or more of the mobile switching centres 7 also provides access to other networks, such as the PSTN (public switched telephone network) as well as other cellular networks.

The network 9 also includes a "quasi-MSC" 5. This co-operates with the rest of the network in a similar manner to the other MSCs 6, 7, routing calls to and from cellular handsets working with it, and handing over such handsets between the qMSC 5 and the other MSCs 6, 7 as they establish or lose contact with them. However, the qMSC connection to a mobile handset 2 is made not through a conventional cellular base station but through an internet connection 4 to an access point base station (femtocell) 1. In practice, several such femtocells may make connection to a single qMSC 5. As femtocells are portable devices, they may be connected to the Internet 4 through any suitable connection and may indeed be moved from place to place as required. Consequently they do not form part of the "neighbour list" of any conventional base station currently in their vicinity. Handover in such circumstances is managed by the base station to which the handset is transferring, rather than by co-operation between both base stations.

A second cellular network 19 is also depicted, connected to the first cellular network 9 as described. The various elements of this network 15, 16, 17, 18 correspond to those of the first network 9, with the respective reference numerals prefixed by an initial "1".

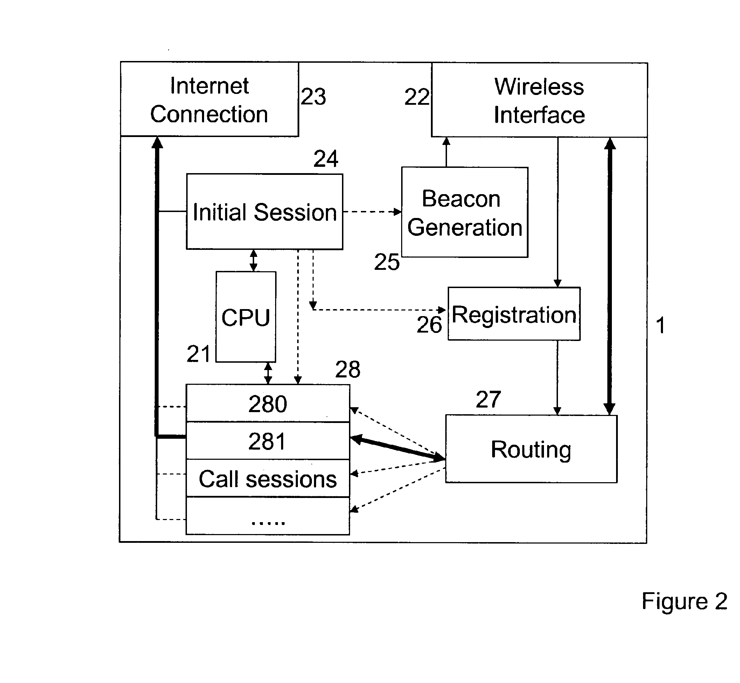

Figure 2 depicts the various internal functions and external interfaces embodied in the access point base station 1 that are relevant to the present invnetion. It will be understood that these functions may be embodied in software or firmware running on generalised hardware, and that the access point base station 1 may also have additional functions and interfaces, not depicted here, such as user interfaces, memory etc.

The access point base station is under the control of a central processor 21, which controls the operation of the other elements. Two external interfaces are depicted: a wireless interface 22 for connection to cellular handsets 2 (Figure 1 ) using the GSM, UMTS or some other protocol, and an Ethernet connection 23 or the like for connection through a point of presence (POP) 3 to the internet 4.

The functional elements relevant to performance of the invention are depicted in Figure 2. These fall into two functional groups, the element 24 concerned with setting up connection to the cellular networks, and the elements 28 concerned with setting up connection with cellular handsets. These functions will be further described with reference to Figures 3 and 4.

The initialisation unit 24 controls the operation of a beacon generator 25, a registration unit 26 and a routing unit 27. The beacon generator generates a signal for transmission over the wireless interface 22 which is specific to a given cellular network operator, and to which handsets are responsive when configured to operate with that operator's network. Existing femtocells are arranged to transmit such a beacon, but according to the present invention the generator 25 is arranged to transmit several beacon signals, on the same channel, each specific to a different operator.

In existing femtocells an Internet session 28 is set up between the serving qMSC 5 and the femtocell, and calls from mobile handsets are handled by the internet session. In the present invention, separate sessions 280, 281, etc are set up with the respective qMSC 5, 15 of each network 9, 19.

Once set up, the internet connection associated with each session 280, 281 etc may be kept permanently running in the background, or they may only be set up when a call is made to or from a handset associated with the respective network.

A routing program 27 acts as a switch to route calls to and from the mobile handsets from and to the appropriate call session, under the control of a registration processor responsive to the handsets' responses to the initial beacon signals.

The operation of the access point base station 1 will now be described with reference to Figures 3 and 4. Figure 3 is a sequence diagram illustrating the process by which the access point base station establishes contact with each quasi-MSC 5, 15. Figure 4 is a sequence diagram illustrating the process by which the access point base station establishes contact between each mobile handset and its respective home network.

According to Figure 3, the establishment of an Internet session between the access point base station and a qMSC 5 is under the control of the initialistaion unit 24. This is provided with the Internet address of each qMSC to which it is to be connected. Each address is provided to the unit in conventional manner (by manual input, preprogramming, or download) - however the present invention allows the access point base station 1 to connect to several such qMSCs simultaneously. The connections may be established one after the other, in a predetermined sequence, or the process depicted in Figure 3 may be run several times in parallel.

The session controller 24 transmits an enquiry 300 to the internet address of the qMSC 5 and receives a response 301 which includes the data necessary to generate a beacon signal specific to the operator of the network 9 with which the qMSC 5 co-operates, and the necessary information needed to authenticate any handsets that may attempt connection to the network 9 through the access point base station 1. This information includes the handshake data needed by the base station to co-operate with the handset, which is forwarded to the registration server 26 (step 303). The initial session controller 24 also causes the call session controller 28 to initiate an internet session 280 between the access point base station 1 and the qMSC 5 (step 304). The session controller 24 also forwards the beacon data 302 to the beacon control unit 25.

The session controller 24 repeats this process for each qMSC 5, 15, allocating a separate call session 280, 281 to each qMSC, configuring the beacon generator 25 to transmit the beacon signals relating to each network on a carrier in a form recognisable to handsets associated with the respective networks, and configuring the registration processor 26 to recognise the handshake data received from handsets making contact through the wireless interface 22, and distinguish between the handshake data associated with each network operator.

The beacon control unit 25 uses the beacon data associated with each qMSC 5, 15 to generate a composite beacon signal 306 for transmission by the wireless interface 22 (307). Although each cellular network operator is usually allocated specific sub-ranges of the wireless spectrum, cellular handsets are designed to operate on a range of frequencies spanning all of these sub-ranges. This allows a user to readily switch from one network to another, simply by replacing the subscriber interface module (SIM) which carries the programming by which a handset recognises the beacon signal of one network as distinct from another. It also allows a user to "roam" from one network to another, subject to agreement by the operators, to provide coverage where a user's home network does not penetrate, for example when travelling abroad. Thus all the beacon signals can be combined in a composite signal carried on a control channel, without each needing to be on a separate network-specific channel.

Mobile units are designed to listen out for the beacon signal associated with a specific operator, according to the programming in the SIM, and to only attempt "roaming" to another operator if they fail to detect their home operator's beacon within a predetermined time. To ensure that mobile handsets lock on to the correct (home network) beacon signal, the composite beacon signal should transmit the data for each individual network's beacon signal in rotation, each individual beacon being transmitted for long enough that a mobile handset can recognise and lock on to it, but not for so long that mobile handsets associated with other networks exceed the predetermined time for connecting to their own networks, and instead "roam" onto the network associated with the beacon currently being transmitted.

Figure 4 illustrates the process by which a handset 2 establishes contact with the qMSC 5 of its associated network 9 using the session 280 already established between the access point base station 1 and the qMSC 5. It should be noted that both the handset 2 and qMSC 5 function in their conventional manners, the essential difference from the prior art is that the access point base station 1 is connected to several qMSCs 5, 15, and must select the one to which the handset should be connected.

The composite beacon 307 transmitted by the radio interface 22 of the access point base station 1 is detected by the handset 2. The handset seeks its own "home" network's beacon. If it does not detect its home network's beacon, it continues to search until it either detects the required beacon or times out and attempts to "roam" to the strongest beacon it can detect. The beacon control unit 25 in the access point base station 1 is configured such that all the individual beacons in the composite signal are transmitted in less time than the time out threshold of the handsets, so that roaming, which tends to costs more to the user and involve more complex network operation, is avoided if possible. Nevertheless, if the access point base station is not currently running a session with a qMSC associated with the mobile handset's home network, access to one of the qMSCs can still be provided by "roaming".

If the handset 2 recognises its home network's beacon 307, it transmits its preprogrammed handshake response 400 over the radio interface 22 to the registration server 26. The identification of the handset's home network may be carried out in one of several ways, for example by matching the user's IMSI (SIM identity) with its home network using an internet-based look up table 99 (step 411). Alternatively the individual beacons may be programmed so that responses to them are distinguishable (i.e. network-specific) allowing, as part of the initialisation process (303), that the registration server 26 can be programmed to recognise, and differentiate between, the handshake responses associated with each network 9, 19.

Once the home network is recognised, the registration server 26 responds by controlling the router 27 (step 401 ) to route all traffic associated with that handset 2 to a specified call session 280, 281 providing connection with the appropriate qMSC 5, 15. Once traffic is routed to the appropriate call session 280, 281, etc, the subsequent operation of the access point base station is conventional. Authentication 402 between the handset 2 and the access point base station home network 9 takes place over the control channel in the wireless interface 22 and, through the router 27 and call session 280, over the internet connection 23 to the qMSC 5.

The home location register 8 associates the handset identity 2 with the qMSC 5. The qMSC, in its turn, associates the handset identity 2 with the current internet address of the access point base station 1, so that calls to the handset can be routed via the qMSC 5 and the access point base station 1. Outgoing calls are routed to the appropriate qMSC 5, 15 according to the routing instructions 401 set up in the router 27 at registration.

Call traffic 406 can be carried over the wireless interface 22 using any RF channel allocated to the access point base station 1. Like the control channel, these channels do not have to be specifically allocated to the same operator as the user's home network 9, and indeed handsets connected to different operators may use the same RF channel in the wireless interface 22, the traffic being routed to and from the appropriate qMSCs by the router 27.

## Claims

1. An access point base station having a network interface, a plurality of network access client applications each for routing calls to and from a respective mobile core network, a wireless interface for transmission and reception of radio signals to and from mobile communications handsets, signal generation means for generating a beacon signal carrying a plurality of network identities corresponding to each of the mobile core networks for transmission over the wireless interface over a common communications channel, a call processor for receiving a handshake signal from a mobile communications terminal indicative of the network identity to which it is responding, and for establishing a communications connection over a data communications network between a mobile communications terminal and the mobile core network corresponding to the network identity indicated by the handshake signal.

2. An access point base station according to claim 1 wherein the signal generation means is arranged to transmit the network identities in rotation.

3. An access point base station according to any preceding claim wherein the signal generation means is configured to suspend the transmission of network identities during operation of the call processor.

4. An access point base station according to any preceding claim, wherein each network client application operates a communications session over a data network to its respective cellular core network whilst one or more mobile terminals associated with the respective core network are in communication with the access point base station.

5. An access point base station according to any preceding claim, wherein each network client application operates a communications session over a data network to its respective cellular core network during initial handover of each mobile terminal which is to co-operate with the respective core network through the access point base station and when a call is to be connected between one or more of the mobile terminal and the respective core network.

6. An access point base station as claimed in any preceding claim wherein the recognition of the required core network is made through processing of the mobile terminal's identity code.

7. An access point base station as claimed in any preceding claim wherein the recognition of the required core network is made from analysis of the response made by the terminal to the network identities contained in the beacon signal.

8. A method of establishing communications connections between mobile terminals and mobile core networks using an access point base station, wherein a plurality of network access client applications are established in the access point base station each for routing calls, to and from a respective mobile core network, over a data communications network; and wherein the access point base station transmits, over a common communications channel, a beacon signal carrying a plurality of network identities each corresponding to a respective one of the mobile core networks, and wherein the access point base station responds to handshake signals received from mobile communications terminal indicative of the network identity to which it is responding, by establishing a communications connection between the mobile communications terminal and the respective mobile core network according to the network identity so indicated, using the respective network client access application.

9. A method according to claim 8 wherein the beacon signal broadcasts the network identities in rotation.

10. A method according to claim 9 wherein each of the network identities is transmitted two or more times on each cycle of the rotation.

11. A method according to claim 8, 9 or 10, wherein the transmission of the beacon signal is suspended when a handshake signal is received from a mobile terminal.

12. A method according to claim 8, 9, 10, or 11, wherein each network client application operates a session over a data network to a respective cellular core network whilst one or more mobile terminals associated with the respective core network are in communication with the access point base station.

13. A method according to claim 8, 9, 10, or 11, wherein each network client application operates a session over a data network to a respective cellular core network during initial handover of each mobile terminal which is to co-operate with the respective core network through the access point base station and when a call is to be connected between one or more of the mobile terminal and the respective core network.

14. A method according to claim 8, 9, 10, 11, 12, or 13 wherein the recognition of the required core network is made through processing of the mobile terminal's identity code.

15. A method according to claim 8, 9, 10, 11, 12, 13 or 14, wherein the recognition of the required core network is made from analysis of the response made by the terminal to the network identities contained in the beacon signal.
